# EUROPÄISCHE PATENTANMELDUNG

(11) **EP 2 631 878 A1**
(43) Veröffentlichungstag der Anmeldung: **28.08.2013**
(21) Anmeldenummer: 13152182.5
(22) Anmeldetag: 22.01.2013
(51) Int. Cl.: G07C 5/00, G08G 1/00, G07C 5/08

(54) **Diagnoseverfahren und Diagnosevorrichtung für eine Fahrzeugkomponente eines Fahrzeugs**

(30) Priorität: 27.02.2012 DE 102012202914
(71) Anmelder: ROBERT BOSCH GMBH, 70442 Stuttgart (DE)
(72) Erfinder: Nordbruch, Stefan, 70806 Kornwestheim (DE); Knoop, Michael, 71638 Ludwigsburg (DE)

(57) **Zusammenfassung**

Die Erfindung betrifft ein Diagnoseverfahren für eine Fahrzeugkomponente eines Fahrzeugs, wobei mehrere Fahrzeuge mit jeweils der gleichen Fahrzeugkomponente vorgesehen werden, wobei während des Betriebs der Fahrzeuge ein Betriebsparameter der jeweiligen Fahrzeugkomponente erfasst (101) wird und abhängig von dem erfassten Betriebsparameter eine Statusnachricht entsprechend dem Status der jeweiligen Fahrzeugkomponente an einen fahrzeugexternen Server (303, 405) für eine Auswertung der Statusnachricht gesendet 103 wird.

Die Erfindung betrifft ferner eine entsprechend Diagnosevorrichtung (201, 501), ein entsprechendes Diagnosesystem (301) und ein Computerprogramm.

## Beschreibung

Die Erfindung betrifft ein Diagnoseverfahren und eine Diagnosevorrichtung für eine Fahrzeugkomponente eines Fahrzeugs. Die Erfindung betrifft ferner ein Diagnosesystem für eine Fahrzeugkomponente eines Fahrzeugs sowie ein Computerprogramm.

### Stand der Technik

Ein bevorstehender Ausfall von Fahrzeugsystemen eines Kraftfahrzeugs wird in der Regel nicht systematisch erfasst. Einige Systeme werden in größeren Abständen bei Werkstattinspektionen geprüft, andere Systeme überhaupt nicht. Dadurch kann ein bevorstehender Ausfall eines wichtigen Systems häufig nicht früh genug erkannt werden. So können diese dann beispielsweise während des Betriebs des Fahrzeugs ausfallen.

### Offenbarung der Erfindung

Die der Erfindung zugrunde liegende Aufgabe kann daher darin gesehen werden, ein Diagnoseverfahren für eine Fahrzeugkomponente eines Fahrzeugs anzugeben, welches die bekannten Nachteile überwindet, und wobei eine Ausfallwahrscheinlichkeit der Fahrzeugkomponente während eines Fahrzeugbetriebs verringert beziehungsweise vermieden wird.

Die der Erfindung zugrunde liegende Aufgabe kann auch darin gesehen werden, eine entsprechende Diagnosevorrichtung, ein entsprechendes Diagnosesystem und ein entsprechendes Computerprogramm bereitzustellen.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird ein Diagnoseverfahren für eine Fahrzeugkomponente eines Fahrzeugs bereitgestellt. Hierbei werden mehrere Fahrzeuge mit jeweils der gleichen Fahrzeugkomponente vorgesehen. Während des Betriebs der Fahrzeuge wird ein Betriebsparameter der jeweiligen Fahrzeugkomponente erfasst, wobei abhängig von dem erfassten Betriebsparameter eine Statusnachricht entsprechend einem Status der jeweiligen Fahrzeugkomponente an einen fahrzeugexternen Server für eine Auswertung der Statusnachricht gesendet wird.

Gemäß einem weiteren Aspekt wird eine Diagnosevorrichtung für eine Fahrzeugkomponente eines Fahrzeugs bereitgestellt. Die Diagnosevorrichtung umfasst eine Erfassungseinrichtung zum Erfassen eines Betriebsparameters der Fahrzeugkomponente. Die Diagnosevorrichtung umfasst ferner eine Sendeeinrichtung zum Senden einer Statusnachricht entsprechend dem erfassten Betriebsparameter an einem fahrzeugexternen Server für eine Auswertung der Statusnachricht.

Nach noch einem weiteren Aspekt wird ein Diagnosesystem für eine Fahrzeugkomponente eines Fahrzeugs bereitgestellt. Das Diagnosesystem umfasst die vorgenannte Diagnosevorrichtung sowie einen fahrzeugexternen Server für eine Auswertung der Statusnachricht.

Gemäß einem weiteren Aspekt wird ein Computerprogramm bereitgestellt, welches Programmcode zur Ausführung des Diagnoseverfahrens für eine Fahrzeugkomponente eines Fahrzeugs umfasst, wenn das Computerprogramm auf einem Computer ausgeführt wird.

Die Erfindung umfasst also insbesondere den Gedanken, Zustandsinformationen, hier insbesondere die Statusnachricht, von der Fahrzeugkomponente, welche beispielsweise von einem Fahrzeugsystem umfasst sein kann, bei der eine Funktionseinschränkung absehbar oder bereits eingetreten ist, über eine geeignete Kommunikation, vorzugsweise drahtlos, an den fahrzeugexternen Server zu senden beziehungsweise zu übertragen, wobei der fahrzeugexterne Server einem Fahrzeughersteller, einem Zulieferer des Fahrzeugsystems beziehungsweise der Fahrzeugkomponente und/oder einer Werkstatt gehören kann. Der Empfänger der Statusnachricht, also insbesondere der Fahrzeughersteller, der Zulieferer des Systems oder die Werkstatt, analysiert die Funktionsstörung, das heißt also, dass der Empfänger insbesondere eine Auswertung der Statusnachricht durchführt. Dadurch, dass mehrere Fahrzeuge mit jeweils der gleichen Fahrzeugkomponente vorgesehen werden, wird in vorteilhafter Weise ein erheblicher Datensatz mit einer Vielzahl an Statusnachrichten gebildet, so dass eine statistisch einfache Auswertung ermöglicht ist. Ferner kann so frühzeitig in vorteilhafter Weise erkannt werden, ob gegebenenfalls die Fahrzeugkomponente einen Serienfehler aufweist. Somit ist es insbesondere ferner in vorteilhafter Weise ermöglicht, zeitnah und rechtzeitig geeignete Maßnahmen, beispielsweise eine Rückrufaktion, für die Fahrzeugkomponente durchzuführen.

Bei den mehreren Fahrzeugen handelt es sich vorzugsweise um eine repräsentative Stichprobe von Fahrzeugen.

Das Erfassen des Betriebsparameters der Fahrzeugkomponente bewirkt insbesondere, dass ein Status der Fahrzeugkomponente erfasst beziehungsweise bestimmt werden kann. Es kann also insbesondere in vorteilhafter Weise eine Aussage darüber getroffen werden, ob eine Funktionseinschränkung der Fahrzeugkomponente besteht oder absehbar ist. Entsprechend kann dann insbesondere die Statusnachricht gebildet werden, welche an den fahrzeugexternen Server gesendet wird, um diese auszuwerten.

Nach einer Ausführungsform kann eine Fahrzeugkomponente beispielsweise eine Fahrzeugkomponente ausgewählt aus der folgenden Gruppe von Fahrzeugkomponenten sein: Antriebssystem, Bremssystem, Lenkungssystem, Beleuchtungssystem, Signalisierungseinrichtungen des Fahrzeugs, Fahrerassistenzsystem, beispielsweise ein elektronisches Stabilitätsprogramm-(ESP)-System, ein adaptives Geschwindigkeitsregelsystem (auf Englisch auch Adaptive Cruise Control, ACC, genannt), ein Dämpfungssystem, ein Videosystem, ein Radarsystem, ein Navigationssystem, ein Fahrwerksystem, ein Kommunikationssystem, ein Motorsystem, ein Getriebesystem und ein Klimasystem.

Nach einer anderen Ausführungsform können auch mehrere Fahrzeugkomponenten in den Fahrzeugen vorgesehen sein. Die Fahrzeugkomponenten können gleich oder unterschiedlich gebildet sein. Das heißt also insbesondere, dass gemäß dieser Ausführungsform ein jeweiliger Betriebsparameter der Fahrzeugkomponenten der mehreren Fahrzeuge erfasst wird, wobei dann analog zu der Ausführungsform mit einer Fahrzeugkomponente entsprechende Statusnachrichten gebildet werden und an den fahrzeugexternen Server abhängig von dem erfassten Betriebsparameter gesendet werden.

Nach einer Ausführungsform umfasst das Erfassen des Betriebsparameters insbesondere ein Überwachen von Sensoren wie beispielsweise Temperatursensoren, Spannungssensoren, Stromsensoren oder Drucksensoren, welche entsprechende physikalische Größen der Fahrzeugkomponente messen können. Insbesondere kann vorgesehen sein, die Sensoren mittels signalbasierter Überwachungen und/oder modellgestützter Überwachungen zu überwachen. Eine signalbasierte Überwachung kann beispielsweise eine Überwachung eines Messbereichs, eines Gradienten, eines Signalpeaks oder eines fehlerhaft konstanten Signals umfassen. Eine modellgestützte Überwachung kann beispielsweise eine Überwachung einer analytischen Redundanz umfassen.

Gemäß einer Ausführungsform kann der erfasste Betriebsparameter mit einem Soll-Betriebsparameterwert verglichen werden. Eine länger andauernde Abweichung, die mit der Zeit anwächst, also größer wird, lässt insbesondere in vorteilhafter Weise auf einen schleichenden Systemfehler schließen. Das heißt also insbesondere, dass vorgesehen sein kann, dass ein zeitlicher Verlauf des Betriebsparameters erfasst und eine Abweichung des Betriebsparameters von einem Soll-Betriebsparameterwert erfasst werden, wobei die Statusnachricht an den fahrzeugexternen Server abhängig von der Abweichung gesendet wird.

Mit der Formulierung "fahrzeugextern" ist ein Ort beziehungsweise Position außerhalb des Fahrzeugs gemeint. Das heißt also insbesondere, dass der fahrzeugexterne Server außerhalb des Fahrzeugs, also extern von diesem, angeordnet ist. Das heißt also insbesondere, dass sich der fahrzeugexterne Server nicht im oder an dem Fahrzeug befindet.

Gemäß einer Ausführungsform wird eine Kommunikation zwischen den Fahrzeugen und dem fahrzeugexternen Server mittels eines drahtlosen Kommunikationsverfahrens durchgeführt. Das heißt also insbesondere, dass die Statusnachricht mittels des drahtlosen Kommunikationsverfahrens an den fahrzeugexternen Server gesendet wird. Ein drahtloses Kommunikationsverfahren kann beispielsweise ein WLAN-Kommunikationsverfahren, ein Mobilfunkkommunikationsverfahren, beispielsweise ein "Long Term Evolution" (LTE)-Mobilfunkkommunikationsverfahren sein. Vorzugsweise kann vorgesehen sein, dass die Statusnachricht mittels einer E-Mail und/oder mittels einer SMS an den fahrzeugexternen Server gesendet wird. Die Kommunikation zwischen den Fahrzeugen und dem fahrzeugexternen Server kann beispielsweise verschlüsselt werden. Eine jeweilige Kommunikation zwischen den Fahrzeugen kann insbesondere gleich oder unterschiedlich durchgeführt werden.

Gemäß einer Ausführungsform kann der Betriebsparameter eine Eingriffsintensität eines Stellers der Fahrzeugkomponente umfassen. Vorzugsweise kann vorgesehen sein, dass die Eingriffsintensität über eine Betriebsdauer der Fahrzeugkomponente aufintegriert wird. Dies kann analog auch allgemein für den erfassten Betriebsparameter gelten. Das heißt also insbesondere, dass der erfasste Betriebsparameter über die Betriebsdauer der Fahrzeugkomponente aufintegriert wird. Eine Eingriffsintensität eines Stellers kann beispielsweise einen Druck, insbesondere einen Druckaufbau, eines elektronischen Stabilitätsprogramm-(ESP)-Hydroaggregats sein. Es kann vorzugsweise ein Vergleich mit Auslegungsgrenzen vorgesehen sein, insbesondere mit Auslegungsgrenzen des vorgenannten ESP-Hydroaggregats.

Gemäß einer Ausführungsform kann ein Betriebsparameter auch eine Drehzahl eines Motors, beispielsweise eines Antriebsmotors oder eines Pumpenmotors, umfassen. Vorzugsweise kann ein Betriebsparameter eine Information über eine aktuelle Stelleransteuerung, beispielsweise eine Bestromung eines oder mehrerer Ventile eines ESP, umfassen.

Ein Betriebsparameter im Sinne der vorliegenden Erfindung bezeichnet insbesondere einen Parameter, welcher einer physikalischen Größe der Fahrzeugkomponente beschreibt beziehungsweise einem physikalischen Zustand der Fahrzeugkomponente entspricht.

Gemäß einer Ausführungsform kann vorgesehen sein, dass die Statusnachricht bereits während des Betriebs des entsprechenden Fahrzeugs gesendet wird. Insbesondere kann vorgesehen sein, dass die Statusnachricht zeitlich unmittelbar nach dem Bilden der Statusnachricht an den fahrzeugexternen Server gesendet wird. Das heißt also insbesondere, dass noch während des Betriebs des Fahrzeugs der Hersteller, der Zulieferer und/oder die Werkstatt Kenntnis über eine bevorstehende Funktionseinschränkung oder die Funktionseinschränkung erlangen können und vorzugsweise entsprechende Maßnahmen ergreifen können.

In einer anderen Ausführungsform kann vorgesehen sein, dass der Betriebsparameter und die Statusnachricht an eine jeweilige zentrale Kommunikationseinrichtung des Fahrzeugs übermittelt werden, wobei die zentrale Kommunikationseinrichtung den Betriebsparameter und/oder die Statusnachricht an den fahrzeugexternen Server senden kann. Das heißt also insbesondere, dass jeweils eine zentrale Kommunikationseinrichtung in den Fahrzeugen vorgesehen sein kann, welche das Senden der Statusnachricht respektive des Betriebsparameters an den fahrzeugexternen Server durchführt. Dadurch muss nicht jede Fahrzeugkomponente selber ein entsprechendes Kommunikationssystem aufweisen. Es reicht hier in vorteilhafter Weise ein einziges Kommunikationssystem, hier die zentrale Kommunikationseinrichtung, welche sämtliche Kommunikation zwischen dem Fahrzeug und dem fahrzeugexternen Server übernimmt. Vorzugsweise ist eine solche zentrale Kommunikationseinrichtung nur in einem Teil der mehreren Fahrzeuge vorhanden.

Nach einer weiteren Ausführungsform kann vorgesehen sein, dass ein jeweiliger Betriebsparameter von weiteren unterschiedlichen Fahrzeugkomponenten erfasst wird, wobei abhängig von den erfassten Betriebsparametern jeweils eine Substatusnachricht entsprechend dem jeweiligen Status der weiteren Fahrzeugkomponenten an eine zentrale fahrzeuginterne Diagnoseeinrichtung übermittelt wird, welche abhängig von den übermittelten Substatusnachrichten die Statusnachricht an den fahrzeugexternen Server sendet. Das heißt also insbesondere, dass die einzelnen Fahrzeugkomponenten ihren jeweiligen Zustand, also ihren Status, im Kontext von mehreren Fahrzeugkomponenten auch als Substatus bezeichnet, an die zentrale Diagnoseeinrichtung übermitteln, welche daraufhin in vorteilhafter Weise einen Status entsprechend dem Gesamtzustand entsprechend den mehreren Fahrzeugkomponenten bilden kann, so dass diese dann an den fahrzeugexternen Server gesandt werden kann. Dadurch kann in vorteilhafter Weise der Empfänger der Statusnachricht einen Überblick über einen Gesamtzustand des Fahrzeugs mit seinen einzelnen Systemen umfassend die mehreren Fahrzeugkomponenten erhalten. Eine noch umfassendere und genauere Fehleranalyse ist somit in vorteilhafter Weise ermöglicht. Vorzugsweise kann eine solche Diagnoseeinrichtung jeweils in allen Fahrzeugen vorgesehen werden.

Gemäß einer anderen Ausführungsform kann vorgesehen sein, dass die Erfassungseinrichtung in einer Steuerung der Fahrzeugkomponente integriert ist.

In einer anderen Ausführungsform kann vorgesehen sein, dass eine zentrale Diagnoseeinrichtung vorgesehen ist, welche mit der Erfassungseinrichtung mittels eines Busses verbunden ist. Bei einem solchen Bus kann es sich beispielsweise um einen Feldbus handeln. Insbesondere handelt es sich bei einem Bus um einen CAN-Bus. Hierbei steht die Formulierung "CAN" für die englischsprachigen Begriffe "Controller Area Network". Das heißt also insbesondere, dass mittels des Busses eine Vernetzung der Steuergeräte der Fahrzeugkomponenten in vorteilhafter Weise ermöglicht ist.

Im Sinne der vorliegenden Erfindung bezeichnet die Formulierung "fahrzeugintern" einen Ort beziehungsweise eine Position an oder innerhalb des Fahrzeugs. Das heißt also insbesondere, dass eine fahrzeuginterne Diagnoseeinrichtung respektive eine fahrzeuginterne Kommunikationseinrichtung sich jeweils in bzw. an zumindest einem Teil der mehreren Fahrzeuge befindet. Vorzugsweise weisen alle Fahrzeuge jeweils eine solche fahrzeuginterne Diagnoseeinrichtung und/oder eine solche fahrzeuginterne Kommunikationseinrichtung auf.

Die Formulierung "zentral" im Sinne der vorliegenden Erfindung bezeichnet insbesondere, dass die entsprechende Vorrichtung, Einrichtung oder System als übergeordnete Instanz für die entsprechenden Funktionalitäten dient. Das heißt also beispielsweise, dass ein zentrales Steuergerät beziehungsweise eine zentrale Steuerung mit weiteren Steuerungen verbunden beziehungsweise vernetzt ist und diese in vorteilhafter Weise steuert und/oder von diesen in vorteilhafter Weise Informationen erhält. Eine zentrale Kommunikationseinrichtung übernimmt also insbesondere in vorteilhafter Weise als übergeordnete Instanz die Kommunikation zwischen dem Fahrzeug und dem fahrzeugexternen Server beziehungsweise weiteren fahrzeugexternen Servern. Eine zentrale Diagnoseeinrichtung übernimmt also in vorteilhafter Weise als übergeordnete Instanz eine Diagnose des Gesamtsystems umfassend die mehreren Fahrzeugkomponenten.

Nach einer weiteren Ausführungsform kann vorgesehen sein, dass die zentrale Diagnoseeinrichtung in einer zentralen Kommunikationseinrichtung umfassend die Sendeeinrichtung integriert ist.

Nach einer weiteren Ausführungsform kann vorgesehen sein, dass in zumindest einem Fahrzeug, insbesondere in allen Fahrzeugen, zusätzlich der entsprechende Betriebsparameter an den fahrzeugexternen Server gesendet wird.

Nach einer weiteren Ausführungsform kann vorgesehen sein, dass in zumindest einem Fahrzeug, vorzugsweise in allen Fahrzeugen, ein Umgebungsparameter entsprechend einer Fahrzeugumgebung erfasst und mit dem erfassten Betriebsparameter zeitlich korreliert wird. Das heißt also insbesondere, dass aufgrund der Korrelation eine Aussage darüber getroffen werden kann, zu welchem Zeitpunkt relativ zum Zeitpunkt der Erfassung des Betriebsparameters der Umgebungsparameter erfasst wurde.

In einer anderen Ausführungsform kann vorgesehen sein, dass in zumindest einem Fahrzeug, vorzugsweise in allen Fahrzeugen, ein Fahrtroutenparameter erfasst und mit dem erfassten Betriebsparameter zeitlich korreliert wird. Das heißt also insbesondere, dass aufgrund der Korrelation eine Aussage darüber getroffen werden kann, zu welchem Zeitpunkt relativ zum Zeitpunkt des Erfassens des Betriebsparameters der Fahrtroutenparameter erfasst wurde.

In einer anderen Ausführungsform kann vorgesehen sein, dass in zumindest einem Fahrzeug, vorzugsweise in allen Fahrzeugen, ein Fahrzeugzustandsparameter erfasst und mit dem erfassten Betriebsparameter zeitlich korreliert wird. Das heißt also insbesondere, dass aufgrund der Korrelation insbesondere eine Aussage darüber getroffen werden kann, zu welchem Zeitpunkt relativ zum Zeitpunkt des Erfassens des Betriebsparameters der Fahrzeugzustandsparameter erfasst wurde.

Fahrtroutenparameter im Sinne der vorliegenden Erfindung können beispielsweise eine Fahrtroute, eine Fahrbahn und/oder Kurvenradien sein.

Fahrzeugzustandsparameter im Sinne der vorliegenden Erfindung beizeichnen insbesondere fahrzeugdynamische Parameter wie beispielsweise eine momentane Fahrzeuggeschwindigkeit und/oder eine momentane Fahrzeugbeschleunigung. Fahrzeugzustandsparameter im Sinne der vorliegenden Erfindung umfassen insbesondere Parameter, welche einen Fahrzeugzustand spezifizieren.

Umgebungsparameter im Sinne der vorliegenden Erfindung bezeichnen insbesondere Parameter, welche eine Fahrzeugumgebung, d.h. also eine Umgebung des Fahrzeugs, spezifizieren. D.h. also insbesondere, dass eine Fahrzeugumgebung messtechnisch erfasst wird. So kann beispielsweise vorgesehen sein, dass eine Temperatur, eine Nässe, Regen, Schnee und/oder Höheninformationen erfasst werden.

Nach noch einer anderen Ausführungsform kann vorgesehen sein, dass ein Datenpaket umfassend den erfassten Betriebsparameter und die Statusnachricht gebildet wird. Dieses Datenpaket kann dann in vorteilhafter Weise an den fahrzeugexternen Server gesendet werden, so dass dieser das Datenpaket entsprechend auswerten kann. Dadurch können in vorteilhafter Weise effizient sowohl die Statusnachricht als auch der erfasste Betriebsparameter in einem Sendevorgang an den fahrzeugexternen Server gesendet werden.

Die Erfindung wird im Folgenden anhand von bevorzugten Ausführungsbeispielen näher erläutert.

Hierbei zeigen
- Fig. 1: ein Ablaufdiagramm eines Diagnoseverfahrens,
- Fig. 2: eine Diagnosevorrichtung,
- Fig. 3: ein Diagnosesystem,
- Fig. 4: ein weiteres Diagnosesystem und
- Fig. 5: eine weitere Diagnosevorrichtung.

Im Folgenden werden für gleiche Merkmale gleiche Bezugszeichen verwendet.

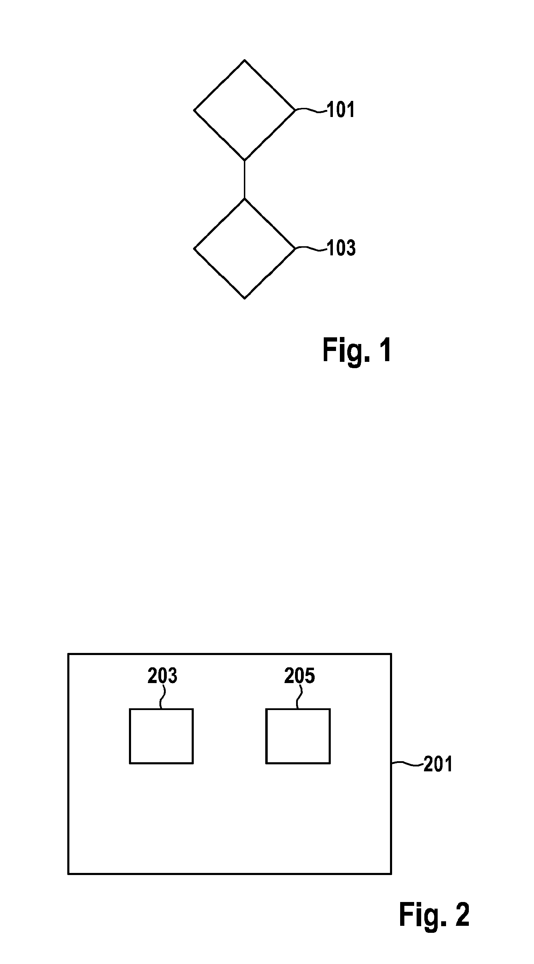

Fig. 1 zeigt ein Ablaufdiagramm eines Diagnoseverfahrens für eine Fahrzeugkomponente eines Fahrzeugs. Hierbei werden mehrere Fahrzeuge mit jeweils der gleichen Fahrzeugkomponente vorgesehen. Gemäß einem Schritt 101 wird während eines Betriebs der Fahrzeuge ein Betriebsparameter der jeweiligen Fahrzeugkomponente erfasst. Gemäß einem Schritt 103 wird abhängig von dem erfassten Betriebsparameter eine Statusnachricht entsprechend einem Status der jeweiligen Fahrzeugkomponente an einen fahrzeugexternen Server für eine Auswertung der Statusnachricht gesendet.

Fig. 2 zeigt eine Diagnosevorrichtung 201 für eine Fahrzeugkomponente (nicht gezeigt) eines Fahrzeugs (nicht gezeigt).

Die Diagnosevorrichtung 201 umfasst eine Erfassungseinrichtung 203 zum Erfassen eines Betriebsparameters der Fahrzeugkomponente. Ferner umfasst die Diagnosevorrichtung 201 eine Sendeeinrichtung 205 zum Senden einer Statusnachricht entsprechend einem Status der Fahrzeugkomponente an einen fahrzeugexternen Server (hier nicht gezeigt) für eine Auswertung der Statusnachricht, wobei das Senden der Statusnachricht abhängig von dem erfassten Betriebsparameter durchgeführt wird.

Gemäß einer nicht gezeigten Ausführungsform kann vorgesehen sein, dass die Erfassungseinrichtung in einer Steuerung der Fahrzeugkomponente integriert ist. In einer weiteren nicht gezeigten Ausführungsform kann eine zentrale Kommunikationseinrichtung vorgesehen sein, in welcher die Sendeeinrichtung integriert ist. Die zentrale Kommunikationseinrichtung ist vorzugsweise ausgebildet, in einem Fahrzeug oder an einem Fahrzeug angeordnet zu werden. In einem solchen Fall kann dann die zentrale Kommunikationseinrichtung als eine zentrale fahrzeuginterne Kommunikationseinrichtung bezeichnet werden.

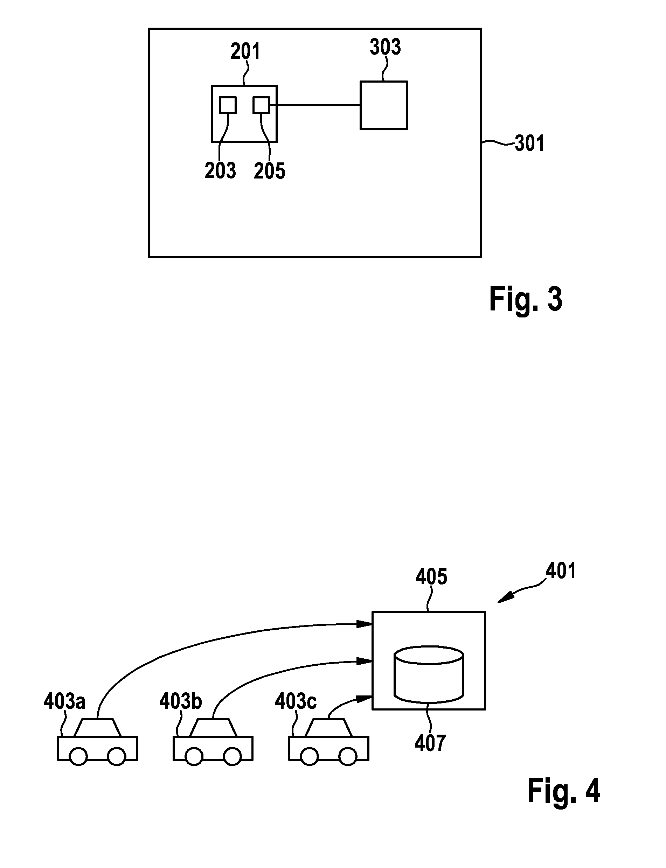

Figur 3 zeigt ein Diagnosesystem 301 für eine Fahrzeugkomponente eines Fahrzeugs.

Das Fahrzeugsystem 301 umfasst die Diagnosevorrichtung 201 gemäß Fig. 2 sowie einen fahrzeugexternen Server 303 für eine Auswertung der Statusnachricht.

Fig. 4 zeigt ein weiteres Diagnosesystem 401 für eine Fahrzeugkomponente, wobei jeweils die gleiche Fahrzeugkomponente in mehreren Fahrzeugen 403a, 403b und 403c angeordnet ist.

In den Fahrzeugen 403a, b, c ist jeweils eine in Fig. 4 nicht dargestellte Diagnosevorrichtung angeordnet. Diese überwacht jeweils insbesondere eine oder mehrere Fahrzeugkomponenten der Fahrzeuge 403a, b, c auf eine mögliche Funktionseinschränkung beziehungsweise auf einen Funktionsausfall. Sofern eine solche Funktionseinschränkung absehbar oder bereits eingetreten ist, wird von dem entsprechenden Fahrzeug an einen fahrzeugexternen Server 405 eine entsprechende Statusnachricht gesendet.

Der fahrzeugexterne Server 405 umfasst beispielsweise eine Reparaturdatenbank 407. Die Reparaturdatenbank 407 umfasst insbesondere reparaturrelevante Daten. Das heißt also insbesondere, dass die Daten, welche in der Reparaturdatenbank 407 gespeichert sind, relevant für eine Reparatur der Fahrzeugkomponente des Fahrzeugs 403 sind. Die Statusnachricht wird von dem fahrzeugexternen Server 405 ausgewertet, insbesondere basierend auf den Reparaturdaten der Reparaturdatenbank 407.

In einem nicht gezeigten Ausführungsbeispiel können mehr oder weniger als drei Fahrzeuge 403a, b, c vorgesehen sein. Durch das Vorsehen einer Vielzahl an Fahrzeugen steht für eine statistische Auswertung der Statusnachrichten ein ausreichend großer Datensatz zur Verfügung, so dass beispielsweise Serienfehler der Fahrzeugkomponente in vorteilhafter Weise schnell und einfach erkannt werden können.

In einer nicht gezeigten Ausführungsform kann vorgesehen sein, dass zumindest einer der folgenden Parameter an den fahrzeugexternen Server 405 gesendet wird:
- Betriebsmodus des Systems bei der Feststellung des bevorstehenden Ausfalls, zum Beispiel beim ESP-Hydroaggregat Druckabsenkung durch Modulation, aktiver Druckaufbau,
- Aktuelle Stelleransteuerung, zum Beispiel beim ESP: Bestromung der Ventile, Drehzahl des Pumpenmotors,
- Parameter betreffen die Frage. welche Systemprüfung bzw. welche Fahrzeugkomponente hat einen Fehler gemeldet,
- Parameter betreffend eine signalbasierte Überwachung (Wertebereich, Gradient, Peaks eines Signals),
- Parameter betreffend eine modellbasierte Überwachung (Plausibilisierung mehrerer Signale gegeneinander durch Auswertung von Modellbeziehungen),
- Weitere fahrzeugspezifische Parameter, wie Betriebsspannung,
- Aktuelle Geschwindigkeit und Beschleunigungen,
- Umgebungsbedingungen, soweit messtechnisch erfasst, zum Beispiel Temperatur, Nässe, Regen, Schnee, Höheninformationen,
- Fahrtrouteninformationen, soweit erfasst, wie Fahrtroute, Fahrbahn, vorzugsweise Kurvenradien,
- Alter des Systems bzw. der Fahrzeugkomponente (Herstelldatum, Produktionsnummer, usw.),
- Wartungsinformationen des Systems bzw. der Fahrzeugkomponente (Werkstattbesuche, usw.).

In einer nicht gezeigten Ausführungsform kann das Diagnoseverfahren folgende Schritte umfassen:
- Feststellung des bevorstehenden Ausfalls im Steuergerät bzw. in der Steuerung des betroffenen Systems bzw. der betroffenen Fahrzeugkomponente,
- Sammlung der Ausfallparameter, also insbesondere der Betriebsparameter, Zusammenstellung zu einem Datenpaket umfassend insbesondere die Betriebsparameter und eine entsprechende Statusnachricht,
- Übermittlung des Datenpakets via fahrzeuginternen Datenbus an ein Kommunikationsgerät bzw. Kommunikationssteuerung,
- Versendung des Datenpakets per drahtloser Kommunikation, beispielsweise mittels Mobilfunk.

Folgende Parameter bzw. Ergebnisse können insbesondere aus einer Auswertung der Statusnachrichten gebildet werden, wobei die Parameter insbesondere qualitätsrelevant sind und insbesondere eine Aussage über eine Qualität der Herstellung ermöglichen. Insofern können solche entsprechenden Parameter auch als qualitätsrelevante Herstellparameter bezeichnet werden:
- Mechanische Toleranzen,
- Elektrische Toleranzen,
- Robustheit von Bauelementen gegen Umgebungsbedingungen (Temperatur, Überspannung).

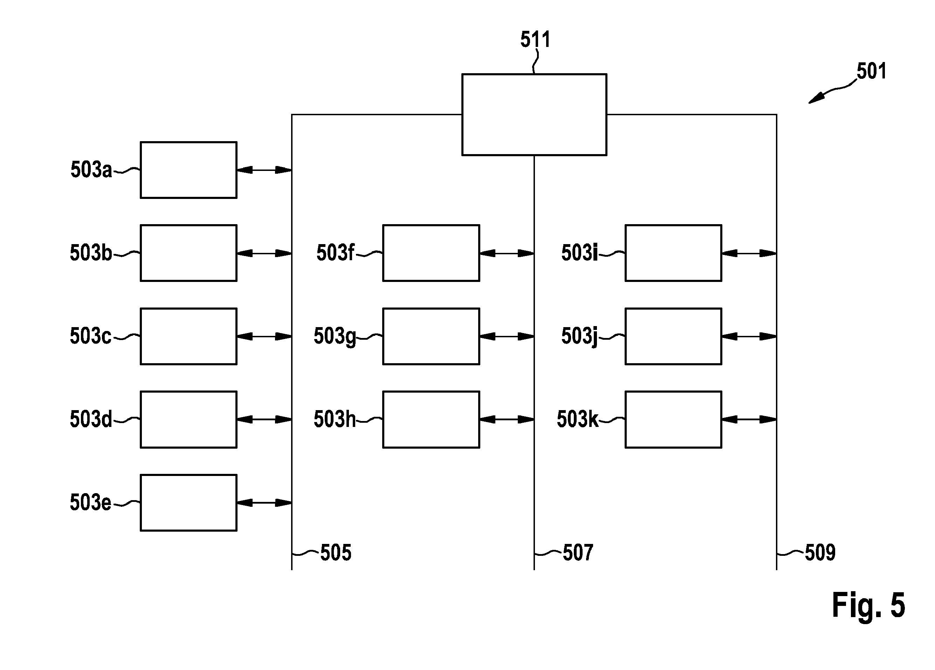

Fig. 5 zeigt eine weitere Diagnosevorrichtung 501 für eine Fahrzeugkomponente (nicht gezeigt) eines Fahrzeugs (nicht gezeigt).

Die Diagnosevorrichtung 501 umfasst mehrere Erfassungseinrichtungen, hier nicht im Detail gezeigt, wobei jeweils eine der Erfassungseinrichtungen in einer Steuerung für eine Fahrzeugkomponente des Fahrzeugs integriert ist. Die Steuerungen für die entsprechenden Fahrzeugkomponenten sind in Fig. 5 mittels der Bezugszeichen 503a bis 503k gekennzeichnet.

Hierbei kennzeichnet das Bezugszeichen 503a eine ESP-Steuerung. Das Bezugszeichen 503b kennzeichnet eine ACC-Steuerung. Das Bezugszeichen 503c kennzeichnet eine Videosteuerung. Das Bezugszeichen 503d kennzeichnet eine Steuerung für eine Dämpferverstellung. Das Bezugszeichen 503f kennzeichnet eine Motorsteuerung. Das Bezugszeichen 503g kennzeichnet eine Getriebesteuerung. Das Bezugszeichen 503i kennzeichnet eine Kommunikationssteuerung. Das Bezugszeichen 503j kennzeichnet eine Navigationssteuerung. In einer nicht gezeigten Ausführungsform können auch mehr oder weniger Steuerungen vorgesehen sein.

Die einzelnen Steuerungen 503a bis 503k sind über Busse verbunden. Hierbei sind die Steuerungen 503a bis 503e mittels eines Fahrwerk-Busses 505 verbunden. Die Steuerungen 503f bis 503h sind über einen Antriebsbus 507 miteinander verbunden. Die Steuerungen 503i bis 503k sind mittels eines Multimedia-Bus 509 verbunden.

Die Busse 505, 507 und 509 sind mit einer zentralen Diagnoseeinrichtung 511 verbunden. Die zentrale Diagnoseeinrichtung 511 nimmt die Störungsmeldungen, also die Substatusnachrichten, der Steuerungen 503a bis 503k entgegen. Aus diesen Substatusnachrichten leitet die zentrale Diagnoseeinrichtung 511 eine technische Gesamtbeurteilung ab und bildet insofern eine entsprechende Statusnachricht. Die Diagnoseeinrichtung 511 kann dann beispielsweise bei einer hier nicht gezeigten zentralen Kommunikationseinrichtung das Absenden beziehungsweise Absetzen der Statusnachricht anfordern.

Der gemäß Fig. 5 beschriebene Aufbau kann auch als eine zentrale Architektur bezeichnet werden, insofern hier die zentrale Diagnoseeinrichtung 511 als zentrale übergeordnete Instanz die Störungsmeldungen der Steuerungen 503a bis 503k entgegennimmt. Im Gegensatz dazu kann in einer nicht gezeigten Ausführungsform eine dezentrale Architektur vorgesehen sein. Das heißt also insbesondere, dass jede Steuerung 503a bis 503k über eine geeignete Kommunikation, beispielsweise einem Datenbus, bei einer Kommunikationssteuerung, beispielsweise der Kommunikationssteuerung 503i, das Absetzen der entsprechenden Substatusnachricht anfordert, wenn es in seinem Zuständigkeitsbereich, also dem Bereich betreffend der Fahrzeugkomponente, welche mittels der entsprechenden Steuerung gesteuert wird, ein bevorstehendes technisches Problem, also beispielsweise eine Funktionseinschränkung oder einen Funktionsausfall, erkennt.

Die zentrale Architekturvariante ermöglicht insbesondere in vorteilhafter Weise, dass zur Beurteilung der Funktionsfähigkeit einer Fahrzeugkomponente Informationen aus mehreren Steuerungen ausgewertet werden können. Das ermöglicht insbesondere eine noch genauere und umfassendere Diagnose der Fahrzeugkomponente.

In einer nicht gezeigten Ausführungsform kann vorgesehen sein, dass die zentrale Diagnoseeinrichtung 511 in einer Gateway-Steuerung integriert ist. Eine solche Gateway-Steuerung ist üblicherweise in einem Kommunikationsnetz, beispielsweise einem Bussystem mit mehreren Datenbussen, hier den Bussen 505, 507 und 509, verbunden und hat somit in vorteilhafter Weise Zugang zu vielen Informationen, insbesondere der einzelnen Steuerungen 503a bis 503k.

Die so eben beschriebenen Ausführungsformen einer Diagnoseeinrichtung können beispielsweise in allen Fahrzeugen oder nur in einem Teil der Fahrzeuge eingebaut sein, wobei die eingebauten Diagnoseeinrichtungen gleich oder unterschiedlich gebildet sein können.

## Patentansprüche

1. Diagnoseverfahren für eine Fahrzeugkomponente eines Fahrzeugs, wobei mehrere Fahrzeuge mit jeweils der gleichen Fahrzeugkomponente vorgesehen werden, wobei während eines Betriebs der Fahrzeuge ein Betriebsparameter der jeweiligen Fahrzeugkomponente erfasst (101) wird und abhängig von dem erfassten Betriebsparameter eine Statusnachricht entsprechend einem Status der jeweiligen Fahrzeugkomponente an einen fahrzeugexternen Server (303, 405) für eine Auswertung der Statusnachricht gesendet (103) wird.

2. Diagnoseverfahren nach Anspruch 1, wobei in zumindest einem Fahrzeug zusätzlich der entsprechende Betriebsparameter an den fahrzeugexternen Server (303, 405) gesendet wird.

3. Diagnoseverfahren nach Anspruch 1 oder 2, wobei in zumindest einem Fahrzeug der Betriebsparameter und die Statusnachricht an eine zentrale Kommunikationseinrichtung des Fahrzeugs für das Senden des Betriebsparameters und der Statusnachricht an den fahrzeugexternen Server (303, 405) übermittelt werden.

4. Diagnoseverfahren nach einem der vorherigen Ansprüche, wobei in zumindest einem Fahrzeug ein jeweiliger Betriebsparameter von weiteren unterschiedlichen Fahrzeugkomponenten erfasst wird und abhängig von den erfassten Betriebsparametern jeweils eine Substatusnachricht entsprechend des jeweiligen Status der weiteren Fahrzeugkomponenten an eine zentrale fahrzeuginterne Diagnoseeinrichtung übermittelt wird, welche abhängig von den übermittelten Substatusnachrichten die Statusnachricht an den fahrzeugexternen Server (303, 405) sendet.

5. Diagnoseverfahren nach einem der vorherigen Ansprüche, wobei in zumindest einem Fahrzeug ein Umgebungsparameter entsprechend einer Fahrzeugumgebung erfasst und mit dem erfassten Betriebsparameter zeitlich korreliert wird.

6. Diagnoseverfahren nach einem der vorherigen Ansprüche, wobei in zumindest einem Fahrzeug ein Fahrtroutenparameter erfasst und mit dem erfassten Betriebsparameter zeitlich korreliert wird.

7. Diagnoseverfahren nach einem der vorherigen Ansprüche, wobei in zumindest einem Fahrzeug ein Fahrzeugzustandsparameter erfasst und mit dem erfassten Betriebsparameter zeitlich korreliert wird.

8. Diagnosevorrichtung (201, 501) für eine Fahrzeugkomponente eines Fahrzeugs, umfassend eine Erfassungseinrichtung (203) zum Erfassen eines Betriebsparameters der Fahrzeugkomponente und eine Sendeeinrichtung (205) zum Senden einer Statusnachricht entsprechend des erfassten Betriebsparameters an einen fahrzeugexternen Server (303, 405) für eine Auswertung der Statusnachricht.

9. Diagnosevorrichtung (201, 501) nach Anspruch 8, wobei die Erfassungseinrichtung (203) in einer Steuerung (503a-k) der Fahrzeugkomponente integriert ist.

10. Diagnosevorrichtung (201, 501) nach Anspruch 8 oder 9, wobei eine zentrale Diagnoseeinrichtung (511) vorgesehen ist, welche mit der Erfassungseinrichtung (203) mittels eines Bus (505, 507, 509) verbunden ist.

11. Diagnosevorrichtung (201, 501) nach Anspruch 10, wobei die zentrale Diagnoseeinrichtung (511) in einer zentralen Kommunikationseinrichtung umfassend die Sendeeinrichtung (205) integriert ist.

12. Diagnosesystem (301) für eine Fahrzeugkomponente eines Fahrzeugs, umfassend eine Diagnosevorrichtung (201, 501) nach einem der Ansprüche 8 oder 11 und einen fahrzeugexternen Server (303, 405) für eine Auswertung der Statusnachricht.

13. Computerprogramm, umfassend Programmcode zur Ausführung des Diagnoseverfahrens nach einem der Ansprüche 1 bis 7, wenn das Computerprogramm auf einem Computer ausgeführt wird.
